# EUROPEAN PATENT APPLICATION

(11) **EP 4 474 364 A1**
(43) Date of publication of application: **11.12.2024**
(21) Application number: 23382574.4
(22) Date of filing: 09.06.2023
(51) Int. Cl.: C04B 20/02, C04B 28/02

(54) **HYDROPHOBIZED RECYCLED CONCRETE AGGREGATES, METHODS FOR THEIR MANUFACTURE, AND USE OF THE HYDROPHOBIZED RECYCLED CONCRETE AGGREGATES IN CEMENTITIOUS COMPOSITIONS**

(71) Applicant: Sika Technology AG, 6340 Baar (CH)
(72) Inventor: Arenas, Ana, 28033 Madrid (ES); Fernández, Jose Manuel, 28670 Villaviciosa de Odón (Madrid) (ES); Valverde, Cristina, 28108 Alcobendas (Madrid) (ES); Garcia, Ramiro, 28108 Alcobendas (Madrid) (ES)
(74) Representative: Sika Patent Attorneys

(57) **Abstract**

The present invention relates to a method of manufacturing hydrophobized recycled concrete aggregates, which are recycled concrete aggregates (RCA) surface modified with one or more silanizing agents selected from organosilanes, linear, branched or cyclic organosiloxane oligomers, polyorganosiloxanes or combinations thereof, and the hydrophobized recycled concrete aggregates obtained by this method.

The hydrophobized recycled concrete aggregates of the invention are suitable as aggregates for cementitious compositions exhibiting a reduced water demand as compared to cementitious compositions including untreated recycled concrete aggregates.

## Description

### Technical Field

The present invention relates to a method for manufacturing hydrophobized recycled concrete aggregates, the hydrophobized recycled concrete aggregates obtained by the method, a cementitious composition comprising the hydrophobized recycled concrete aggregates, and the use of hydrophobized recycled concrete aggregates as a replacement for primary aggregates in cementitious compositions.

### Background of the invention

Construction and demolition waste (CDW) constitutes a major portion of total solid waste production in the world, and most of it is disposed in landfills. From an environmental point of view, there is therefore a high demand for possibilities to recycle such waste.

On the other hand, natural aggregates, such as sand, which are conventionally used in cementitious compositions, such as concrete or mortar, are usually non-renewable natural resources and more countries have pushed regulation in favour of recycling material instead of using natural aggregates.

One approach for recycling of CWD is to use it in form of so-called recycled aggregates (RA) from construction and demolition waste, such as recycled concrete aggregates (RCA), as a substitute for natural aggregates such as sand in cementitious products such as concretes and mortars.

Recycled aggregates (RA) from construction and demolition waste are relatively simply obtained by crushing and optionally sieving the construction and demolition waste into a material of specified size, wherein contaminations such as reinforcing steel or other embedded items are generally removed before, during and/or after the production from the construction and demolition waste. Of course, the recycled aggregates obtained depend on the type of construction and demolition waste used.

Recycled concrete aggregates (RCA) from a construction and demolition waste are mainly comprised of cementitious waste such as old concrete or mortar. Thus, RCA is mainly based on natural aggregates and hydrated cement paste of the cementitious waste.

The use of RCA as a partial or complete substitute for natural aggregates such as sand in cementitious compositions, such as concrete or mortar is an attractive approach from an environmental and economic point of view.

However, the use of RCA as a replacement of natural aggregates in cementitious compositions is also associated with serious disadvantages. In particular, the use of RCA in cementitious compositions results in a significant higher water demand and a poor control of shrinkage as compared to the conventionally used aggregates.

According to the prior art superplasticizers are used to avoid the increase in water demand in cementitious compositions. Examples of commonly used superplasticizers are lignosulphonates or polycarboxylate ethers. Another general approach to reduce the water demand of cementitious compositions are the addition of water reducing admixtures of various chemical composition. Superplasticizers or other water reducing admixtures are generally added to the fresh cementitious composition, i.e. into the fresh mix of tempering water and concrete, or to the tempering water. Water repellents are also used to treat surfaces of set concrete components externally.

However, the prior art approaches are not satisfactory since high amounts of expensive chemicals such as superplasticizers or other water reducing admixtures are required to achieve a certain effect which can also impair other properties of the cementitious composition. Moreover, an additional working step on site is required by said addition, which complicates the processing of the cementitious composition.

### Summary of the invention

Accordingly, an object of the present invention is to mitigate or eliminate the increased water demand when using recycled concrete aggregates as partial or complete substitute for conventional aggregates, such as sand in cementitious compositions such as concrete or mortar. Moreover, the properties of the cementitious compositions including the recycled concrete aggregates should be comparable to cementitious compositions prepared with natural aggregates such as sand, e.g. with respect to the shrinkage control. In addition, complication of the processing of cementitious composition by additional working steps should be avoided.

Surprisingly, it has been found that the object can be solved by providing hydrophobized recycled concrete aggregates which can be obtained by treating recycled concrete aggregates with specific silanizing agents. Thus, the object is solved by the provision of a method of manufacturing hydrophobized recycled concrete aggregates as claimed in claim 1 and the hydrophobized recycled concrete aggregates obtainable by such method.

Accordingly, the present invention is directed to a method of hydrophobizing recycled concrete aggregates (RCA), said method comprising the steps of
(i) providing recycled concrete aggregates (RCA),
(ii) applying a silanizing liquid to the recycled concrete aggregates, wherein the silanizing liquid comprises one or more silanizing agents selected from organosilanes, linear, branched or cyclic organosiloxane oligomers, polyorganosiloxanes or combinations thereof, and
(iii) drying the recycled concrete aggregates treated with the silanizing liquid, preferably at a temperature of 15 to 90 °C.

The hydrophobization of the RCA is achieved by treatment with the silanizing liquid.

In other words, the silanizing agent acts as a hydrophobizing agent.

It was surprisingly found that the hydrophobized recycled concrete aggregates obtained by the method of the invention can be integrated into cementitious compositions such as mortar or concrete formulations without problems. Use of other hydrophobic agents as modifiers for recycled concrete aggregates has been shown to result in aggregates, which could not be integrated in cementitious compositions. Without wishing to be bound to any theory, it is assumed that the specific silanizing agents used according to the present invention do not completely waterproof the aggregates.

After treatment of the RCA with the silanizing liquid water absorption is reduced. The performance of the cementitious compositions in which the treated RCA are included is increased and closer to primary sand and other natural aggregates. Particular advantages of the present invention are:
- improved properties of recycled concrete aggregates from construction and demolition waste such as a reduced water absorption, when hydrophobized according to the present invention,
- reduced water consumption by reducing water demand of cementitious compositions including the hydrophobized recycled concrete aggregates according to the present invention as compared to the use of untreated recycled concrete aggregates in the cementitious compositions,
- improved properties of final cementitious compositions such as concrete and mortar when formulated with the hydrophobized recycled concrete aggregates according to the present invention,
- reducing the amount of construction and demolition waste (CDW) to be disposed in landfills,
- saving non-renewable resources, namely natural aggregates such as sand,
- saving energy required for furnishing and transport of natural aggregates,
- generating a new range of products based on recycled aggregates.

Further aspects of the present invention are the subject of additional independent claims. Preferred embodiments are the subject of dependent claims.

### Ways for carrying out the invention

The present invention relates to a method of manufacturing hydrophobized recycled concrete aggregates, said method comprising the steps of
(i) providing recycled concrete aggregates (RCA),
(ii) applying a silanizing liquid to the recycled concrete aggregates, wherein the silanizing liquid comprises one or more silanizing agents selected from organosilanes, linear, branched or cyclic organosiloxane oligomers, polyorganosiloxanes or combinations thereof, and
(iii) drying the recycled concrete aggregates treated with the silanizing liquid, preferably at a temperature of 15 to 90 °C.

According to step (i) of the inventive method, recycled concrete aggregates (RCA) are provided. Recycled concrete aggregates (RCA) are derived from construction and demolition waste (CDW). Different types of CDW exist depending on the origin and the extent of assorting or mixing of the waste. In particular, construction and demolition waste mainly comprising cementitious waste such as concrete or mortar waste is typically used to obtain recycled concrete aggregates. Concrete or mortar waste is e.g. recovered from the rehabilitation of bridges, sidewalks, roads, buildings and other structures.

Within the present context, the term CDW refers to any construction material comprising aggregates and which is not intended for its original purpose. CDW especially is surplus material, off-spec material, returned material or demolition waste. Especially, the CDW is demolition waste. CDW within the present context contains aggregates and at least one binder but is otherwise not limited in its composition.

According to preferred embodiments, the CDW comprises at least one aggregate and at least one mineral, hydraulic binder, preferably hardened mineral binder. Mineral, hydraulic binders are for example, cements, gypsum, lime, clays, latent hydraulic binders, pozzolanes, and geopolymers. It is possible that the CDW is a mix of different materials. For example, the CDW can be concrete or mortar, mixtures of concrete and gypsum-based materials, mixtures of concrete and plaster, mixtures of brick and mortar, mixtures of brick, mortar, and plaster, etc. It is, however, preferred, that the CDW does not contain large pieces of metals or wood. According to especially preferred embodiments, the CDW is waste concrete, especially waste concrete from demolition.

The construction and demolition waste is usually processed by crushing, removal of contaminations such as reinforced steel, wood, plastic, glass or other embedded items and optionally by screening to obtain the recycled concrete aggregates. The particle size of the recycled concrete aggregates can be controlled e.g. by the type, intensity and duration of the crushing process. Optionally, a screening step is added to obtain recycled concrete aggregates of a desired particle size. The removal of contaminations such as reinforcing steel, wood, plastic, glass or other embedded items can be carried out before, during and/or after the crushing process. This removal can be done e.g. by means of magnets, by washing or by density separation. Of course, such a removal is not necessary, if the construction and demolition waste used is free of unwanted contaminations.

Recycled concrete aggregates (RCA) mainly comprises aggregates and hydrated cement paste from the cementitious waste included in the CDW. The amount of aggregates and hydrated cement paste from CDW, in particular cementitious waste, in the recycled concrete aggregates is typically at least 50 wt.-%, preferably at least 75 wt.-% and more preferably at least 90 wt.-% and can be up to 100 wt.-%, based on the total weight of the recycled concrete aggregates. The aggregates from the CDW include e.g. sand, gravel, crushed stone or slag. The cement hydrated cement paste from CDW may be from any type of cement or cementitious material conventionally used.

According to step (ii) of the inventive method, a silanizing liquid is applied to the recycled concrete aggregates, wherein the silanizing liquid comprises one or more silanizing agents selected from organosilanes, linear, branched or cyclic organosiloxane oligomers, polyorganosiloxanes or combinations thereof.

The silanizing agents selected from organosilanes, linear, branched or cyclic organosiloxane oligomers, polyorganosiloxanes or combinations thereof are generally organosilicon compounds containing one or more silicon atoms, at least one organic group, preferably a substituted or unsubstituted alkyl group, bound to a silicon atom, and at least one reactive group bound to a silicon atom selected from a hydroxyl group or a hydrolysable group. The substituted or unsubstituted alkyl group may have 1 to 18 carbon atoms, preferably 1 to 8 carbon atoms. The hydrolysable group may be e.g. an alkoxy group, preferably an alkoxy group having 1 to 6 carbon atoms, preferably 1 or 2 carbon atoms, or an acyloxy group. The selected silanizing agents are known compounds and commercially available.

Upon hydrolysis, hydrolysable groups of the silanizing agents can be converted into hydroxyl groups bound to the silicon atom (silanol group) which are reactive with chemical groups present on the surface of the recycled concrete aggregates. As indicated the silanizing agents can also include hydroxyl groups as reactive groups so that in this case hydrolysis is not necessary. Without wishing to be bound to any theory, it is assumed that the treatment of the recycled concrete aggregates with the silanizing liquid results in a surface modification of the recycled concrete aggregates by the silanizing agent involving at least partially a chemical bonding of the silanizing agents on the surface of the recycled concrete aggregates. However, alternatively or additionally it is also possible that the surface modification by the silanizing agents results in a mere coating of the recycled concrete aggregates and/or filling of pores in the recycled concrete aggregates.

The admixture procures an active coating on the surface of the recycled concrete aggregates that prevents water absorption. It is still not clear, if the underlying mechanism is by change of surface tension of the aggregates or by pore blocking. In any case, the surface modification by the silanizing agents improves the recycled concrete aggregate properties, so that it could resemble as much as possible the properties of natural aggregate, especially with respect to water absorption.

Within the present context, applying a silanizing agent to a particulate material, especially a recycled concrete aggregate, leads to hydrophobization of said particulate material.

The silanizing agent is selected from organosilanes, linear, branched or cyclic organosiloxane oligomers, polyorganosiloxanes or combinations thereof.

The organosilane is preferably an alkylsilane such as an alkytrialkoxysilane, preferably an alkylsilane having the general formula (I) 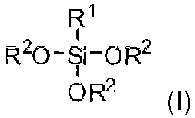 in which R¹ is C₁-C₁₈ alkyl, preferably C₃-C₈, R² is the same or different and is a hydrogen atom or an alkyl group having 1 to 6 carbon atoms, preferably 1 or 2 carbon atoms.

Preferred examples of R¹ and R² of the alkylsilane having the general structure (I) are:
R¹ = CH₃-, C₂H₅-, C₃H₇-, i-C₃H₇-, C₄H₉-, i-C₄H₉-, C₆H₁₃-, i-C₆H₁₃, C₈H₁₆- or i-C₈H₁₆-, and
R² = H-, methyl- or ethyl-.

Preferred examples of the organosilane are n-propyltrialkoxysilane, isopropyltrialkoxysilane, n-butyltrialkoxysilane, isobutyltrialkoxysilane and octyltrialkoxysilane, wherein the alkoxy group has preferably 1 to 6 carbon atoms and is more preferably methoxy or ethoxy.

The linear, branched or cyclic organosiloxane oligomer has preferably an average degree of oligomerization in the range of 2 to 100, preferably 2 to 50, more preferably 2 to 30, still more preferably 10 to 50 or 10 to 30, wherein the organosiloxane oligomer is preferably an alkylsiloxane oligomer, wherein one or more alkyl groups of the alkylsiloxane oligomer may contain one or more substituents including heteroatoms such as N, O, F, CI, P or S, for instance an amino group or a hydroxyl group. The average molecular weight of the linear, branched or cyclic organosiloxane oligomer is preferably in the range from 300 to 10000 g/mol.

Such linear, branched or cyclic organosiloxane oligomers are preferably obtainable by hydrolysis and condensation reactions of one or more silanes selected from silanes having the general formula (IIa) and/or silanes having the general formula (IIb)

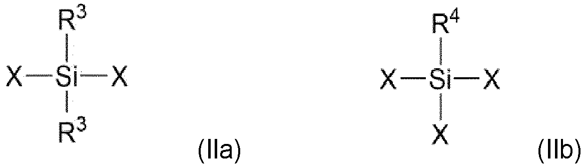

In the silanes of the general formula (IIa), R³ independently of one another denotes C₁-C₁₈ alkyl, which may contain one or more substituents including heteroatoms such as N, O, F, CI, P or S, such as an amino group or a hydroxy group, or aryl such as phenyl. Preferred examples of R³ are CH₃-, C₂H₅-, C₃H₇-, C₄H₉-, i-C₄H₉-, C₆H₁₃-, i-C₆H₁₃, C₈H₁₆- or i-C₈H₁₆-.

In the silanes of the general formula (IIb), R⁴ denotes C₁-C₁₈ alkyl, which may contain one or more substituents including heteroatoms such as N, O, F, Cl, P or S, such as an amino group or a hydroxy group, or aryl such as phenyl. Preferred examples of R⁴ are CH₃-, C₂H₅-, C₃H₇-, C₄H₉-, i-C₄H₉-, C₆H₁₃-, i-C₆H₁₃, C₈H₁₆- or i-C₈H₁₆-.

In both the silanes of the general formula (IIa) and the silanes of the general formula (IIb), X is the same or different and denotes a hydroxyl group or a hydrolysable group such as an alkoxy group having 1 to 6 carbon atoms, preferably 1 or 2 C atoms, or an acyloxy group such as acetoxy. Preferred examples of X are hydroxyl, methoxy and ethoxy.

Some examples of silanes of the general formula (IIa) are dimethyldimethoxysilane, dimethyldiethoxysilane, ethylmethyldimethoxysilane, ethylmethyldiethoxysilane, isobutylmethyldimethoxysilane, isobutylmethyldiethoxysilane, phenylethyldimethoxysilane, phenylethyldiethoxysilane, phenylmethyldimethoxysilane, phenylmethyldiethoxysilane, phenylmethoxydiethoxysilane, and phenylmethyldiacetoxysilane.

Examples of silanes of the general formula (IIb) are methyltrimethoxysilane, methyltriethoxysilane, methyltri-n-propoxysilane, methyltri-i-propoxysilane, methyltri-n-butoxysilane, methyltri-i-butoxysilane, methyltri-sec-butoxysilane, methyltri-t-butoxysilane, ethyltrimethoxysilane, ethyltriethoxysilane, ethyltri-n-propoxysilane, ethyltri-i-propoxysilane, ethyltri-n-butoxysilane, ethyltri-i-butoxysilane, ethyltri-t-butoxysilane, n-propyltrimethoxysilane, n-propyltriethoxysilane, isopropyltrimethoxysilane, n-butyltrimethoxysilane, isobutyltrimethoxysilane, isobutyltriethoxysilane, pentyltrimethoxysilane, pentyltriethoxysilane, hexyltrimethoxysilane, n-octyltrimethoxysilane, n-octyltriethoxysilane and iso-octyltrimethoxysilane,.

The polyorganosiloxane has preferably the general formula (III) 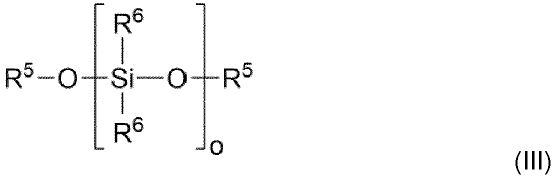 wherein R⁵ is the same or different and represents a hydrogen atom or alkyl having 1 to 6 carbon atoms, preferably 1 or 2 carbon atoms, R⁶ is the same or different and represents a hydrogen atom or alkyl having 1 to 6 carbon atoms, preferably 1 or 2 carbon atoms, and o is more than 100, preferably more than 100 to 5000, more preferably more than 100 to 1000. Preferred examples of R⁵ are H-, CH₃-, C₂H₅-. Preferred examples of R⁶ are H-, CH₃-, C₂H₅-.

In a preferred embodiment, the polyorganosiloxane, preferably the polyorganosiloxane of general formula (III), is a polydialkylsiloxane, in particular a polydimethylsiloxane or a polydiethylsiloxane, each having at least one or at least two terminal groups selected from hydroxyl and alkoxy, preferably methoxy or ethoxy.

The highest reduction in water absorption of the hydrophobized recycled concrete aggregates obtained in the inventive method was achieved when the amount of silanizing agent was in the range of 10 to 15 wt.-%, based on the weight of the recycled concrete aggregates. However, such a high amount of silanizing agent may impair the capability to incorporate or integrate the hydrophobized recycled concrete aggregate into a cementitious composition, in particular in admixture with water. Moreover, such high amounts of silanizing agent would be associated with increased costs. The amount of silanizing agent is preferably at least 0.5 wt.-% in order to have a more improved water reducing effect.

Accordingly, the amount of silanizing agent applied to the recycled concrete aggregates by the silanizing liquid is preferably in the range of 0.5 to 10 wt.-%, more preferably 0.5 to 6 wt.-%, still more preferably 0.5 to 2 wt.-%, based on the weight of the recycled concrete aggregates.

The silanizing liquid comprises a solvent in which the one or more silanizing agents are dissolved, emulsified or dispersed, preferably emulsified. The solvent may be water and/or at least one organic solvent such as an alcohol. The solvent is preferably water or a mixture of water and at least one organic solvent such as an alcohol.

It may be advantageous to adjust the pH of the silanizing liquid prior to application, e.g. by adding a base to adjust the pH to >10 or by adding an acid to adjust the pH to <4. The addition of an acid to adjust the pH to <4 is more preferably.

Preferably, the silanizing liquid may be a solution, an emulsion or a dispersion. The silanizing liquid is preferably an aqueous silanizing liquid. In a preferred embodiment, the silanizing liquid is an aqueous emulsion.

In certain embodiments, it is preferred that the silanizing liquid further comprises at least one emulsifier. The emulsifier is preferably selected from the series of alkyl sulfates with C₈-C₁₈-alkyl, alkyl and alkaryl ether sulfates with C₈-C₁₈-alkyl in the hydrophobic residue and 1 to 40 ethylene oxide (EO) or propylene oxide (PO) units, alkyl sulfonates with C₈-C₁₈-alkyl, alkaryl sulfonates with C₈-C₁₈ alkyl, and half esters of sulfosuccinic acid with monohydric alcohols or alkyl phenols containing 5 to 15 carbon atoms, alkali metal and ammonium salts of carboxylic acids containing 8 to 20 carbon atoms in the alkyl, aryl, alkaryl or aralkyl residue, alkyl and alkaryl phosphates containing 8 to 20 carbon atoms in the organic residue, alkyl ether or alkaryl ether phosphates having 8 to 20 carbon atoms in the alkyl or alkaryl residue and 1 to 40 EO units, alkyl polyglycol ethers and alkaryl polyglycol ethers having 8 to 40 EO units and C₈-C₂₂ carbon atoms in the alkyl or aryl residues, ethylene oxide/propylene oxide (EO/PO) block copolymer having 8 to 40 EO or PO units, addition products of alkylamines with C₈-C₂₂ alkyl residues with ethylene oxide or propylene oxide, alkylpolyglycosides with linear or branched saturated or unsaturated C₈-C₂₄ alkyl residues and oligoglycoside residues with 1 to 10 hexose or pentose units, silicon-functional surfactants or mixtures of these emulsifiers.

The emulsifier content in the silanizing liquid is preferably 0.01 to 5% by weight, based on the total weight of the emulsion.

The silanizing liquid may further contain at least one hydrolysis or condensation catalyst. The hydrolysis or condensation catalyst may be selected from complex compounds, such as halides, oxides, hydroxides, imides, alcoholates, amides, thiolates, carboxylates and/or combinations of these substituents, of elements of the third and fourth main group of the periodic table of the elements (PSE) as well as of subgroups II, III, IV, V, VI, VII and VIIIa, VIIIb and VIIIc of the PSE, in particular titanates or zirconates, such as tetra-n-butylorthotitanate or tetra-n-propylorthozirconate. Further examples are oxides, hydroxides, hydrogen phosphates, hydrogen sulfates, sulfides, hydrogen sulfides, carbonates or hydrogen carbonates of the first and second main group of the PSE and/or alcoholates, preferably sodium methanolate or sodium ethanolate and/or amino alcohols, preferably 2-aminoethanol or 2-(N,N-dimethyl)aminoethanol. Finally, carboxylic acids such as formic acid, acetic acid or propionic acid as well as mineral acids such as hydrochloric acid or phosphoric acid may also be used as hydrolysis or condensation catalyst.

In addition, the silanizing liquid may contain one or more customary additives such as inorganic or organic acids, buffer substances, fungicides, bactericides, algicides, microbiocides, odorants, corrosion inhibitors, preservatives, rheological aids.

Advantageously, the silanizing liquid, in particular in form of an emulsion, can be further diluted with water before use. In principle, all types of water such as deionized water, drinking water, waste water or seawater are suitable. Dilutions usable according to the invention comprises 1 part of the silanizing liquid and 0 to 99 parts of water, preferably 1 part of silanizing liquid and 0.1 to 49 parts of water, more preferably 1 part of silanizing liquid and 1 to 9 parts of water. Here, parts refer to weight parts.

The content of the silanizing agent in the silanizing liquid applied on the RCA can vary in wide ranges, such as 0.5 to 99.5 wt.-%, preferably 2 to 90 wt.-%, based on the total weight of the silanizing liquid. However, it is preferred that a rather diluted form of the silanizing liquid is applied to support a homogeneous distribution of the silanizing agent in the aggregates. In a preferred embodiment, the silanizing liquid applied contains 3 to 60 wt.-%, preferably 5 to 20 wt.-%, of the one or more silanizing agents, based on the total weight of the silanizing liquid.

According to step (ii) of the method, the silanizing liquid is applied to recycled concrete aggregates. The application may be carried out by spraying or pouring the silanizing liquid onto the recycled concrete aggregates, preferably by spraying. Pouring may be effected by adding the silanizing liquid dropwise onto the recycled concrete aggregates.

According to a preferred embodiment, the application of the silanizing liquid to the recycled concrete aggregates is supported by mixing the obtained material of silanizing liquid and recycled concrete aggregates.

Mixing can be effected in a mixing unit or simply by manual stirring the obtained material of silanizing liquid and recycled concrete aggregates with a stirring element. Suitable mixing units are internal mixers, such as a Lödige mixer, a Hobart mixer, a conical mixer, a stirred tank, kneaders or mixers. Suitable mixing units are advantageously those that do not break up the hydrophobized recycled concrete aggregates into smaller particles during the mixing process. A mixing time of 30 s to 5 min such as 1 to 2 min may be sufficient.

Accordingly, in a preferred embodiment the silanizing liquid is applied to the recycled concrete aggregates by spraying or pouring the silanizing liquid onto the recycled concrete aggregates and mixing the obtained material of silanizing liquid and recycled concrete aggregates.

As discussed above, in a preferred embodiment of the method according to the invention, the amount of silanizing agent applied by means of the silanizing liquid is in the range of 0.5 to 10 wt.-%, preferably 0.5 to 6 wt.-%, more preferably 0.5 to 2 wt.-%, based on the weight of the recycled concrete aggregates.

According to step (iii) of the inventive method, the recycled concrete aggregates treated with the silanizing liquid is dried.

Drying can be effected at a temperature of e.g. 15 to 90 °C, preferably 20 to 80 °C, more preferably 30 to 50 °C. In view of energy and cost savings drying at low temperatures and even at ambient temperature or slightly elevated temperatures is preferred. The duration of drying is of course also dependent on the drying temperature used. When using higher temperatures, drying may be effected within e.g. 0.5 to 2 h, whereas drying at low temperatures such as 30 to 50 °C may require e.g. 12 to 48 h such as 24 h.

The invention is also directed to hydrophobized recycled concrete aggregates (RCA) obtained by the method according to the invention as described above.

All aspects, proportions and embodiments described above for the inventive method, in particular with respect to the silanizing liquid, the silanizing agent, and the recycled concrete aggregates also apply to the inventive hydrophobized recycled concrete aggregates (RCA) so that reference is made thereto.

As discussed above, the hydrophobized recycled concrete aggregates of the invention may be recycled concrete aggregates (RCA) surface modified with one or more silanizing agents selected from organosilanes, linear, branched or cyclic organosiloxane oligomers, polyorganosiloxanes or combinations thereof, wherein the surface modification involves a chemical bonding of the silanizing agents on the surface of the recycled concrete aggregates and/or physical coating of the recycled concrete aggregates with the silanizing agents and/or filling of pores in the recycled concrete aggregates with the silanizing agents.

In a preferred embodiment, the amount of silanizing agent present in the hydrophobized RCA is preferably in the range of 0.5 to 10 wt.-%, more preferably 0.5 to 6 wt.-%, still more preferably 0.5 to 2 wt.-%, based on the weight of the recycled concrete aggregates.

In a preferred embodiment, the hydrophobized recycled concrete aggregates of the invention have a grain size of not more than 40 mm, preferably not more than 20 mm, more preferably not more than 10 mm, most preferably not more than 4 mm. The hydrophobized recycled concrete aggregates may have a grain size of at least 0.001 mm such as at least 0.063 mm or such as at least 0.125 mm, though a separation of very fine particles is usually not necessary. The grain size can be analyzed by sieve analysis as described for example in EN 12192-1:2002 or EN 933-1:2012. In case of particles with a grain size below 75 µm, the wet method of EN 933-1:2012 is used.

The present invention is further directed to a cementitious composition comprising
a) a cementitious binder, preferably Portland cement, such as Ordinary Portland Cement (OPC) and
b) hydrophobized recycled concrete aggregates according to the invention as described above.

The cementitious composition is preferably a mortar or a concrete.

The hydrophobized recycled concrete aggregates according to the invention have been discussed so that reference is made thereto.

The cementitious binder is preferably a cement, in particular Portland cement such as Ordinary Portland Cement (OPC). A suitable OPC is, for example, classified as CEM I under standard DIN 197-1. However, other OPC classified, for example, under the relevant ASTM, JIS or Chinese standards is also suitable. It is also possible to use blended cements as the cementitious binder such as Portland composite cement (CEM II), blast furnace cement (CEM III), pozzolanic cement (CEM IV) and composite cement (CEM V) according to DIN 197-1 instead of OPC. It is further possible to use special cements, such as calcium sulfoaluminate cement, calcium aluminate cement, or mixtures thereof in addition to the OPC.

The cementitious binder of the cementitious composition of the present invention may also comprise latent hydraulic binders and/or pozzolanic binders. Suitable latent hydraulic and/or pozzolanic binders are in particular granulated blast furnace slag, calcined clay, fly ash, silica fume and/or micro silica.

The cementitious composition may be a dry, wet or hardened cementitious composition. The dry cementitious composition has typically a content of water of not more than 10 wt.-%, preferably not more than 3 wt.-%, especially not more than 1 wt.-%, in each case relative to the total weight of the dry cementitious composition. The dry cementitious composition is usually a powdered cementitious composition.

The wet cementitious composition means the (dry) cementitious composition mixed with the water to obtain the fresh cementitious composition. The mix ratio by weight of water to the cementitious composition may be e.g. from 0.1 to 1.0, preferably 0.2 to 0.6. After hardening of the wet cementitious composition, a hardened cementitious composition is obtained.

Apart from the hydrophobized recycled concrete aggregates according to the invention, the cementitious composition may contain conventional aggregates different from hydrophobized recycled concrete aggregates of the invention, such as e.g. sand, or not. In other words, in the cementitious composition the primary aggregates conventionally used may be substituted completely or in part by the hydrophobized recycled concrete aggregates.

The cementitious composition of the present invention may comprise one or more additives common in the mortar and/or concrete industry such as plasticizers and/or superplasticizers, redispersible polymers, accelerators, retarders, air entrainers, stabilizers, viscosity modifiers, thickeners, accelerators, retarders, water resisting agents, strength enhancing additives, blowing agents, pigments, corrosion inhibitors, etc.

In a preferred embodiment, the cementitious composition according to the invention, comprises, based on the dry weight of the cementitious composition,
a) 10 to 40 wt.-%, preferably 20 to 30 wt.-%, of the cementitious binder, preferably Portland cement, and
b) 50 to 80 wt.-%, preferably 60 to 70 wt.-% of the hydrophobized recycled concrete aggregates.

The skilled person is familiar with the methods, processing and devices for mixing a dry cementitious composition with water.

The good integration of the hydrophobized recycled concrete aggregates into the cementitious composition has a positive effect on the workability of freshly produced concrete. Workability is assessed by measuring how easily the concrete flows, which can be measured by means of concrete slump test e.g. according to UNE EN 83258:2005 which is also indicative for the water demand of the composition.

A particular advantage of the hydrophobized recycled concrete aggregates is a reduced water absorption of the recycled concrete aggregates, while at the same time allowing the hydrophobizing recycled concrete aggregates to be well integrated into the cementitious composition.

Moreover, the present invention is directed to the use of the hydrophobized recycled concrete aggregates according to the invention to replace primary aggregates in a cementitious composition. The cementitious composition is preferably a mortar or a concrete.

The use of hydrophobized recycled concrete aggregates in a cementitious composition can reduce the consumption of natural primary concrete aggregates such as sand. This saves resources and reduces costs without affecting the material properties of the cementitious composition to a large extent.

The use according to the invention is particularly suitable for reducing the water demand in a cementitious composition compared to the use of recycled concrete aggregates not hydrophobized in the same cementitious composition.

The use of hydrophobized recycled concrete aggregates in a cementitious composition can not only reduce the consumption of fresh concrete aggregates, but also of water. Especially in view of the changing climatic conditions, this contributes to environmental protection.

The following examples will provide the skilled person with further embodiments of the present invention.

### Examples

The following gives an overview of the materials used.

| | |
|---|---|
| Sand | standard sand for aggregates in cementitious compositions as control aggregates, the sand is a river sand, grain size: 0-4 mm |
| RCA | recycled concrete aggregates from construction and demolition waste, grain size: 0-4 mm |
| SIL1 | silanizing liquid, emulsion of triethoxyoctylsilane in water (ca. 50% solids) |
| SIL2 | silanizing liquid, emulsion of organomodified polysiloxane in water (50% solids content, stabilized with C11-C15 secondary alcohol ethoxylate) |
| cement | CEM I 42,5 R |

### Examples 1-6 - Preparation of hydrophobized RCA

For application, the silanizing liquids SIL1 and SIL2 are each diluted with water to obtain an emulsion with 10 % by weight of the silanizing agents, based on the total weight of the silanizing liquid. The respective diluted silanizing liquid was applied on RCA with dosages so that 1, 5 and 10 % by weight of the silanizing agents, respectively, based on the weight of RCA are applied as indicated in Table 1 below. The respective diluted silanizing liquids SIL1 and SIL2 are applied by spraying or pouring drops onto the RCA and then the obtained material is mixed. The mixing was carried out in a Hobart mixer for 60 sec. After mixing the material is dried at 23 °C for 24 hours to obtain the hydrophobized recycled concrete aggregates. In some cases, application of the silanizing liquid by pouring, e.g. dropwise, may be advantageous in that scaling up is easier.

The water absorption of the hydrophobized recycled concrete aggregates prepared was measured according to UNE EN 1097-6. As a reference, water absorption of the RCA not been treated with a silanizing liquid is also determined as a reference. The results are also given in Table 1.

**Table 1**

| | RCA | silanizing liquid | amount of silanizing agents, based on weight of RCA | water absorption [%] |
|---|---|---|---|---|
| Example 1 | RCA | SL1 | 1 wt.-% | 2.91 |
| Example 2 | RCA | SL1 | 5 wt.-% | 2.37 |
| Example 3 | RCA | SL1 | 10 wt.-% | 1.86 |
| Example 4 | RCA | SL2 | 1 wt.-% | 2.41 |
| Example 5 | RCA | SL2 | 5 wt.-% | 1.89 |
| Example 6 | RCA | SL2 | 10 wt.-% | 1.97 |
| RCA (Reference) | RCA | - | - | 4.65 |

### Examples 7 and 8 and Reference examples 1 and 2 - Preparation of mortars

1:3 mortars were prepared by adding 1 part cement to 3 parts aggregates (by weight). The amount of cement used was 450 g. The mortars were mixed with water, actual w/c = 0.58 (w/c is weight ratio of water to cement).

The aggregates used in Reference Example 1 is normal commercial sand without any treatment with 0-4 mm granulometry.

The aggregates used in Example 7 are the hydrophobized RCA prepared in Example 2 (RCA surface-treated with SL1, amount of silanizing agents: 5 wt.-% based on the weight of RCA).

The aggregates used in Example 8 are the hydrophobized RCA prepared in Example 5 (RCA surface-treated with SL2, amount of silanizing agents: 5 wt.-% based on the weight of RCA).

The aggregates used in Reference Example 2 is RCA (untreated).

Slump tests were carried out to determine the consistency of fresh mortars according to UNE EN 83258:2005 which is indicative for the water demand of the mortars.

Details of the tests and the results of the slump test are summarized in the Table 2.

**Table 2**

| | Aggre -gates | silanizing agents, based on weight of RCA | slump (mm) | | | Density [kg/m³] |
|---|---|---|---|---|---|---|
| | | [wt.-%] | initial | decrease [%]* | decrease [%]** | initial |
| Ref. Ex. 1 | sand | 0.00 | 210 | | | 2.148 |
| Ex. 7 | Ex. 2 | 5.00 | 142 | 32 | 68 | 2.054 |
| Ex. 8 | Ex. 5 | 5.00 | 143 | 32 | 67 | 2.049 |
| Ref. Ex. 2 | RCA | 0.00 | 110 | 48 | 100 | 2.078 |

| | | | | | | |
|---|---|---|---|---|---|---|
| * in relation to Ref. Ex. 1 ** in relation to Ref. Ex. 2 | | | | | | |

The Examples 7 and 8 demonstrate that there is a good integration of the hydrophobized RCA in the mortars. The water demand for Examples 7 and 8 is reduced as compared to Reference Example 2.

The hardened mortar of Example 8 is visually inspected by SEM (scanning electron microscopy). The photographs show a reasonable cement crystallization (C-S-H gel) demonstrating that the hydrophobized RCA do not affect cement crystallization and are properly integrated within the cementitious matrix.

### Reference Example 3

A mortar specimen of original dimensions of 40 x 40 x 160 mm was prepared with a fresh mortar in the same way as Reference Example 1, i.e. sand without any treatment was used as aggregates.

### Example 9

A mortar specimen of original dimensions of 40 x 40 x 160 mm was prepared with a fresh mortar in in the same way as Example 8, i.e. RCA hydrophobized with SL2 was used as aggregates.

### Porosity testing on specimens of Reference Example 3 and Example 9

The porosity was measured in three sections (sections 1, 2, 3) of each mortar specimen of Reference Example 3 and Example 9 with original dimensions 40 x 40 x 160 mm. The porosity was measured by mercury intrusion porosimetry according to ASTM D4404.

The porosity was determined separately for three pore size ranges, namely:

| | |
|---|---|
| PS1 | Pore size < 0.001 mm³ |
| PS2 | Pore size = 0.001 to 0.09 mm³ |
| PS3 | Pore size > 0.09 mm³ |

For each of these pore size ranges, the amount and the volume of the pores present were determined. The results of the porosity test are summarized in Table 3.

**Table 3**

| | Pore size range | PS1 | PS2 | PS3 | PS1 | PS2 | PS3 |
|---|---|---|---|---|---|---|---|
| | Section | amount of pores [%] | | | volume of pores [%] | | |
| Ref. Ex. 3 | 1 | 82.90 | 15.26 | 1.84 | 1.16 | 7.54 | 91.30 |
| Ref. Ex. 3 | 2 | 81.29 | 17.56 | 1.15 | 3.09 | 13.85 | 83.06 |
| Ref. Ex. 3 | 3 | 75.90 | 21.82 | 2.28 | 2.14 | 11.71 | 86.15 |
| Ex. 9 | 1 | 0.34 | 55.3 | 44.36 | 2.69 | 50.89 | 46.42 |
| Ex. 9 | 2 | 0.69 | 16.42 | 82.89 | 13.91 | 57.96 | 28.13 |
| Ex. 9 | 3 | 1.37 | 19.86 | 78.77 | 9.93 | 22.30 | 67.77 |

In Reference Example 3, it is observed that the dominant porosity has a pore size < 0.001 mm³ (PS1, amount). Quantification of the volume shows that despite the lower number of pores having a pore size >0.09 mm³ (PS3), the total volume occupied by these pores is high.

In inventive Example 9, there is a change in the trend of the formation of porosity. Without wishing to be bound to any theory, it is assumed that this is directly related to the surface tension that is altered by the presence of the SIL2 coating on the RCA particles.

## Claims

1. A method of manufacturing hydrophobized recycled concrete aggregates, said method comprising the steps of
(i) providing recycled concrete aggregates (RCA),
(ii) applying a silanizing liquid to the recycled concrete aggregates, wherein the silanizing liquid comprises one or more silanizing agents selected from organosilanes, linear, branched or cyclic organosiloxane oligomers, polyorganosiloxanes or combinations thereof, and
(iii) drying the recycled concrete aggregates treated with the silanizing liquid, preferably at a temperature of 15 to 90 °C.

2. The method as claimed in claim 1, wherein the silanizing liquid is an aqueous silanizing liquid, preferably an aqueous solution, dispersion, or emulsion.

3. The method as claimed in at least one of claims 1 or 2, wherein the silanizing liquid applied contains 3 to 60 wt.-%, preferably 5 to 20 wt.-%, of the one or more silanizing agents, based on the total weight of the silanizing liquid.

4. The method as claimed in at least one of claims 1 to 3, wherein the silanizing agent is applied in an amount in the range of 0.5 to 10 wt.-%, preferably 0.5 to 6 wt.-%, more preferably 0.5 to 2 wt.-%, based on the weight of the recycled concrete aggregates.

5. The method as claimed in at least one of claims 1 to 4, wherein the silanizing liquid is applied to the recycled concrete aggregates by spraying or pouring the silanizing liquid onto the recycled concrete aggregates and mixing the obtained material of silanizing liquid and recycled concrete aggregates.

6. The method as claimed in at least one of claims 1 to 5, wherein the organosilane is an alkylsilane, preferably an alkylsilane having the general structure (I) 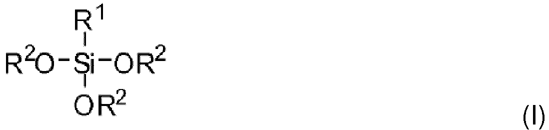
in which R¹ is C₁-C₁₈ alkyl, preferably C₃-C₈ alkyl, R² is the same or different and is a hydrogen atom or alkyl having 1 to 6 carbon atoms, preferably 1 or 2 carbon atoms,
the linear, branched or cyclic organosiloxane oligomer has an average degree of oligomerization in the range of 2 to 100, preferably 2 to 50, more preferably 2 to 30, wherein the organosiloxane oligomer is preferably an alkylsiloxane oligomer, wherein one or more alkyl groups of the alkylsiloxane oligomer may contain one or more substituents including heteroatoms such as N, O, F, CI, P or S, and/or
the polyorganosiloxane has the general formula (III) 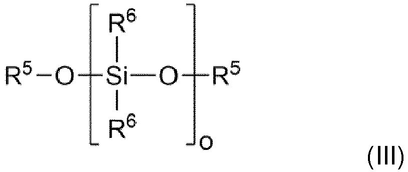
wherein R⁵ is the same or different and represents a hydrogen atom or alkyl having 1 to 6 carbon atoms, preferably 1 or 2 carbon atoms, R⁶ is the same or different and represents a hydrogen atom or alkyl having 1 to 6 carbon atoms, preferably 1 or 2 carbon atoms, and o is more than 100, preferably more than 100 to 5000, more preferably more than 100 to 1000.

7. Hydrophobized recycled concrete aggregates (RCA) obtained by a method as claimed in at least one of claims 1 to 6.

8. The hydrophobized recycled concrete aggregates as claimed in claim 7, wherein the amount of silanizing agent present is in the range of 0.5 to 10 wt.-%, preferably 0.5 to 6 wt.-%, more preferably 0.5 to 2 wt.-%, based on the weight of the recycled concrete aggregates.

9. The hydrophobized recycled concrete aggregates as claimed in at least one of claims 7 to 8, wherein the hydrophobized recycled concrete aggregates have a grain size of not more than 40 mm, preferably not more than 20 mm, more preferably not more than 10 mm, most preferably not more than 4 mm.

10. A cementitious composition, comprising
a) a cementitious binder, preferably Portland cement, and
b) hydrophobized recycled concrete aggregates as claimed in at least one of claims 7 to 9,
wherein the cementitious composition is preferably a mortar or a concrete.

11. The cementitious composition according to claim 10, comprising, based on the dry weight of the cementitious composition,
a) 10 to 40 wt.-%, preferably 20 to 30 wt.-%, of the cementitious binder, preferably Portland cement, and
b) 50 to 80 wt.-%, preferably 60 to 70 wt.-% of the hydrophobized recycled concrete aggregates.

12. The use of hydrophobized recycled concrete aggregates as claimed in at least one of claims 7 to 9 to replace primary aggregates in a cementitious composition, preferably a mortar or a concrete.
